# EUROPEAN PATENT SPECIFICATION

(11) **EP 3 075 488 B1**
(45) Date of publication and mention of the grant of the patent: **24.10.2018**
(21) Application number: 16000606.0
(22) Date of filing: 14.03.2016
(51) Int. Cl.: B23K 35/30, B23K 35/40, B23K 9/16, B23K 35/362, B23K 35/36, B23K 35/02, B23K 35/22, C22C 38/00, C22C 38/02, C22C 38/04, C22C 38/06, C22C 38/08, C22C 38/12, C22C 38/14, C22C 38/18, B23K 9/173, C22C 38/16

(54) **FLUX CORED WIRE FOR GAS SHIELDED ARC WELDING**
FÜLLDRAHT FÜR GASABGESCHIRMTES LICHTBOGENSCHWEISSEN
FIL FOURRÉ POUR SOUDURE À L'ARC SOUS PROTECTION GAZEUSE

(30) Priority: 30.03.2015 JP 2015069479
(43) Date of publication of application: 05.10.2016
(73) Proprietor: Kabushiki Kaisha Kobe Seiko Sho (Kobe Steel, Ltd.), Kobe-shi, Hyogo 651-8585 (JP)
(72) Inventor: Kikuchi, Kazuyuki, Fujisawa-shi, Kanagawa, 251-8551 (JP); Sasakura, Shuji, Fujisawa-shi, Kanagawa, 251-8551 (JP); Koike, Takayuki, Fujisawa-shi, Kanagawa, 251-8551 (JP)
(74) Representative: Müller-Boré & Partner Patentanwälte PartG mbB

(56) References cited:
- JP-A- H05 293 687
- JP-A- H11 179 590
- JP-A- S63 194 893
- JP-A- 2008 221 231
- JP-A- 2011 125 904
- JP-A- 2012 218 065
- JP-A- 2013 158 777
- JP-A- 2013 226 577
- JP-A- 2013 226 578
- JP-A- 2014 113 615
- JP-A- 2014 184 481

## Description

The present disclosure relates to a flux cored wire for gas shielded arc welding.

In manufacturing procedures of large-sized structures, such as ships and bridges, fillet welding and/or butt welding is often applied. In these cases, a flux cored wire is used as welding material. Weld metals in ships, bridges, etc., are required to have excellent low-temperature toughness and mechanical properties in terms of construction work. The flux cored wire for use in welding is further desired to have excellent welding workability. For this reason, in the related art, for example, a flux cored wire is proposed that has improved welding workability and mechanical properties of weld metal by specifying an arc stabilizer and/or a flux composition (see JP 2003-94196 A).

In general, hydrogen exists in a weld metal. As the hydrogen content in the weld metal increases, cold cracks are more likely to occur in the weld metal. However, the conventional flux cored wire has a problem that it absorbs moisture during storage, leading to an increase in hydrogen content in the weld metal. This is because a flux included in the flux cored wire absorbs moisture in air.

The flux cored wire mentioned in the above-mentioned JP 2003-94196 A can improve the mechanical properties of the weld metal and welding workability, but fails to consider hygroscopic properties. Furthermore, even other related-art techniques make it difficult to improve the hygroscopic properties of the flux itself.

JP 2014113615 discloses a similar composition as that of the invention and emphasizes the importance of avoiding sputtering. JP H05293687 discloses a similar composition as that of the invention and a grain size distribution of the flux.

Therefore, it is a main object of the present disclosure to provide a flux cored wire for gas shielded arc welding that has excellent resistance to hygroscopicity and adequate welding workability and can produce weld metal with excellent mechanical properties.

The flux cored wire for gas shielded arc welding according to the present invention is a flux cored wire for gas shielded arc welding, the flux being filled into a steel outer sheath, wherein the flux contains acid-soluble Al, a content of the acid-soluble Al in a first flux component having a particle diameter of 75 µm or less in the flux is set at 0.1 to 5% by mass relative to the total mass of the first flux component, a content of the acid-soluble Al in a second flux component having a particle diameter of more than 75 µm and 106 µm or less in the flux is set at 0.1 to 5% by mass relative to the total mass of the second flux component, and a content of the acid-soluble Al in a third flux component having a particle diameter of more than 106 µm in the flux is set at 0.1 to 7% by mass relative to the total mass of the third flux component.

In the flux cored wire for gas shielded arc welding in the present disclosure, a flux filling ratio is in a range of 10 to 25% by mass relative to the total mass of the wire.

The flux cored wire for gas shielded arc welding contains the acid-soluble Al in a content of 0.01 to 1.0% by mass relative to the total mass of the wire.

The flux cored wire for gas shielded arc welding includes, relative to the total mass of the wire: 1 to 10% by mass of at least one of Ti and Ti compound(s) in total in terms of Ti. Further, the flux cored wire for gas shielded arc welding may include, relative to the total mass of the wire: 0.5 to 2% by mass of at least one of Si and Si compound (s) in total in terms of Si; 1.0 to 3.0% by mass of Mn; and 0.02 to 0.15% by mass of C, wherein a P content is restricted to 0.030% by mass or less, and a S content is restricted to 0.030% by mass or less.

The flux cored wire for gas shielded arc welding can also include, relative to the total mass of the wire: 0.05 to 0.5% by mass of at least one of Na compound(s), K compound(s) and Li compound(s) in total in terms of Na, K and Li, respectively; and 0.05 to 0.3% by mass of F compound(s) in terms of F.

The flux cored wire for gas shielded arc welding may include, relative to the total mass of the wire: 0.5% by mass or less of at least one of Zr and Zr compound(s) in total in terms of Zr. The flux cored wire for gas shielded arc welding includes, relative to the total mass of the wire: 0.01 to 1.0% by mass of at least one of Al and Al compound(s) in total in terms of Al.

The flux cored wire for gas shielded arc welding can also include, relative to the total mass of the wire: 0.005 to 0.050% by mass of at least one of Bi and Bi compound(s) in total in terms of Bi.

Further, the flux cored wire for gas shielded arc welding in the present disclosure can also include, relative to the total mass of the wire, at least one selected from the group consisting of: Cu: 0.5% by mass or less; Ni: 3.0% by mass or less; Cr: 0.5% by mass or less; Mo: 0.5% by mass or less; Nb: 0.2% by mass or less; V: 0.2% by mass or less; at least one of B and B compound (s) ; 0.0001 to 0. 0100% by mass in total in terms of B; and rare earth metal(s) (REM(s)): 0.01 to 0.5% by mass.

On the other hand, in the flux cored wire for gas shielded arc welding in the present disclosure, a Fe content is 77% by mass or more, relative to the total mass of the wire.

Accordingly, the present invention can improve the hygroscopic properties of the flux, and hence can achieve the flux cored wire for gas shielded arc welding that has excellent resistance to hygroscopicity and adequate welding workability and can produce weld metal with excellent mechanical properties.

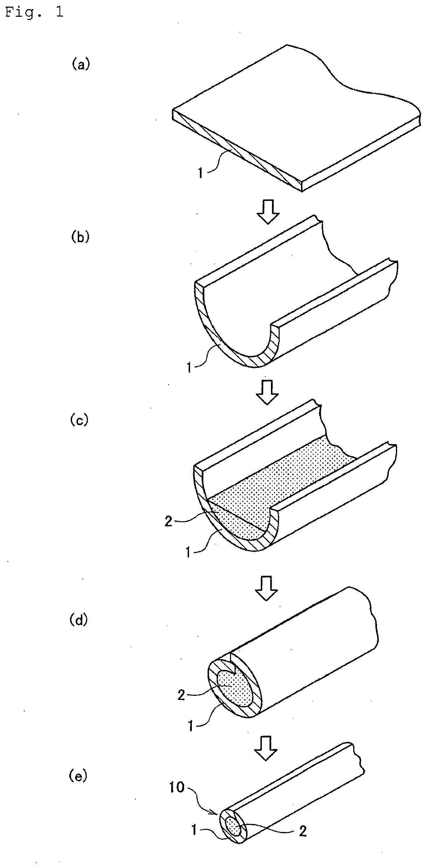

Fig. 1 is schematic diagram for explaining some steps in manufacturing methods for flux cored wires in Examples and Comparative Examples.

The present disclosure will be described in detail below.

The flux cored wire is formed by filling a flux into a steel outer sheath and has an outer diameter, for example, of 1.0 to 2 . 0 mm. Material for the outer sheath is not specifically limited as long as it is steel, but is desirably soft steel or low-alloy steel that has excellent wire-drawing workability. Further, a flux filling ratio can be set to any value as long as the contents of the respective components in the wire satisfy the ranges defined by the present invention. However, the flux filling ratio is preferably set at 10 to 25% by mass relative to the total mass of the wire in view of the drawability and workability of the wire during welding (including feeding).

### [Acid-soluble Al content in the flux]

In the flux cored wire, acid-soluble aluminum (Al) is blended into the flux. Here, the term "acid-soluble Al" as used herein means any one of Al, an Al alloy, and Al compound (s) that can be dissolved in aqua regia (a liquid mixture of concentrated hydrochloric acid and concentrated nitric acid in a ratio of 3:1 by volume) . Note that any Al that can be dissolved in aqua regia is regarded as the acid-soluble Al, though it has low solubility, or it is a mixture or composite of an acid-soluble Al and an acid-insoluble Al.

In general, Al is added to the flux cored wire in the form of metal or an alloy, or a compound, such as an oxide and/or an intermetallic compound. Specifically, examples of an Al source added to the flux include metal Al, Fe-Al, Al-Mg, Al₂O₃ and AlF₃. Among them, examples of the "acid-soluble Al" include metal Al, Fe-Al and Al-Mg.

In the flux cored wire, the acid-soluble Al content in the flux component having each particle size is set within a specific range. Specifically, the acid-soluble Al content in a first flux component(s) having a particle diameter of 75 *µ*m or less in the flux is set at 0.1 to 5% by mass relative to the total mass of the first flux component (s) ; the acid-soluble Al content in a second flux component (s) having a particle diameter of more than 75 *µ*m and 106 *µ*m or less in the flux is set at 0.1 to 5% by mass relative to the total mass of the second flux component (s) ; and the acid-soluble Al content in a third flux components having a particle diameter of more than 106 *µ*m in the flux is set at 0.1 to 7% by mass relative to the total mass of the third flux component(s). Thus, the flux cored wire can improve its resistance to hygroscopicity and reduce the spatter generation amount. To improve the resistance to hygroscopicity, the smaller absorption area is more advantageous, and hence the particle size of Al in the flux is preferably set larger. On the other hand, to improve the arc stability and suppress the spatter generation amount, the particle size of Al in the flux is preferably set small and dispersed in the flux. The reason for this is that Al having its surface oxidized or an Al oxide floats at the surface of a weld metal to become a cathode spot that draws arc, however, when the Al particle size is large and Al is unevenly distributed, arc might be deflected to become unstable in some cases. As with the present invention, the acid-soluble Al contents in the flux components having the respective particle sizes are set within the above-mentioned specific ranges, which can improve the resistance to hygroscopicity as well as arc stability to thereby reduce the spatter generation amount. That is, the present invention can simultaneously exhibit contradictory effects, specifically, an effect of improving the resistance to hygroscopicity and an effect of improving the arc stability to suppress the spatter generation amount. The reason why Al can be dispersed in the flux is supposed to be that by appropriately setting the particle size distribution of Al in the flux, Al in the flux is well combined with other flux particles, thereby preventing Al in the flux from unevenly distributing, and dispersing Al in the flux.

Here, the acid-soluble Al content means an Al content relative to the total mass of the flux component (s) having each particle size. The flux is sieved to be separated into a first flux component having a particle diameter of 75 *µ*m or less in the flux, a second flux component having a particle diameter of more than 75 *µ*m and 106 *µ*m or less in the flux, and a third flux component having a particle diameter of more than 106 µm in the flux. The flux components having the respective particle sizes are mixed in the aqua regia. Then, the contents of the flux components dissolved in the aqua regia were analyzed by an inductively coupled plasma (ICP) method, whereby the acid-soluble Al contents are determined.

When the acid-soluble Al content in the first flux component having a particle diameter of 75 *µ*m or less in the flux is less than 0.1% by mass relative to the total mass of the first flux component, the spatter generation amount is increased, whereas when the acid-soluble Al content in the first flux component is more than 5% by mass, the resistance to hygroscopicity is degraded. When the acid-soluble Al content in the second flux component having a particle diameter of more than 75 *µ*m and 106 *µ*m or less in the flux is less than 0.1% by mass relative to the total mass of the second flux component, the spatter generation amount is increased, whereas when the acid-soluble Al content in the second flux component is more than 5% by mass, the slag covering property is degraded. When the acid-soluble Al content in the third flux component having a particle diameter of more than 106 *µ*m in the flux is less than 0.1% by mass or more than 7% by mass, relative to the total mass of the third flux component, the toughness of the weld metal is degraded.

Al contained in the flux cored wire extends in the wire-drawing direction or is crushed into fine grains by wire-drawing. The inventors of the present application have intensively studied focusing on Al and found that when the minor diameter of Al after the wire-drawing is defined as a particle diameter of Al, there is a correlation between an Al raw material and the particle size of Al after the wire-drawing. The improvement of the resistance to hygroscopicity of the flux cored wire and the reduction in spatter generation amount are not influenced so much by the form of added Al, but significantly affected by the particle-size distribution.

However, in the conventional flux cored wire, the Al raw material used as the flux component does not have the appropriate particle-size distribution and thus cannot reduce the spatter generation amount, failing to improve the resistance to hygroscopicity. For this reason, the inventors have studied various Al raw materials and found that the use of the acid-soluble Al having a specific particle-size distribution can produce the flux that has an excellent effect of improving the arc stability to thereby suppress the spatter generation amount as well as an excellent effect of improving the resistance to hygroscopicity.

For example, a suitable raw material for the acid-soluble Al contains 10 to 30% by mass of an Al raw material having a particle diameter of 75 µm or less, 25 to 40% by mass of an Al raw material having a particle diameter of more than 75 µm and 125 µm or less, 25 to 40% by mass of an Al raw material having a particle diameter of more than 125 µm and of 212 µm or less, and 5% by mass or less (including 0% by mass) of an Al raw material having a particle diameter of more than 212 µm. As shown from part(c) to part(d) of Fig.1, a flux 2 containing the acid-soluble Al is filled into a steel outer sheath 1, and then the steel outer sheath 1 is formed in such a manner as to hold the flux 2 inside the steel outer sheath 1. Then, a formed wire is drawn as illustrated from part (d) to part (e) of Fig. 1. Here, the formed wire having a wire diameter of 5.0 mm is drawn to a wire diameter of 1.2 mm, so that the particle-size distribution of the acid-soluble Al in the flux included in the drawn flux cored wire can be set within the above-mentioned specific range. Note that the raw material for the acid-soluble Al used in the flux cored wire can be manufactured by normal methods. Further, methods for causing the Al raw material to have its particle-size distribution in the specific range are not specifically limited, but can include a method of applying a pulverization treatment, a method of mixing a plurality of kinds of raw materials, and the like.

The composition of the flux cored wire according to the present invention contains the following components. Note that the contents of respective components mentioned below are those relative to the total mass of the wire unless otherwise specified.

### [Al and Al compound (s) : 0.01 to 1.0% by mass, acid-soluble Al: 0.01 to 1.0% by mass]

The flux cored wire contains 0.01 to 1.0% by mass of at least one of Al and Al compound (s) in total in terms of Al. In this way, the toughness of the weld metal can be further improved. On the other hand, when the total content of the Al and Al compound(s) is less than 0.01% by mass, the spatter generation amount is increased, whereas when the total content thereof is more than 1.0% by mass, the toughness of the weld metal is reduced.

The content of the acid-soluble Al of the Al and Al compound (s) is in a range of 0.01 to 1.0% by mass. In this way, the toughness of the weld metal and the resistance to hygroscopicity of the flux cored wire can be further improved. On the other hand, when the acid-soluble Al content is less than 0.01% by mass, the spatter generation amount might be increased. When the acid-soluble Al content is more than 1.0% by mass, the toughness of the weld metal might be degraded. Therefore, the acid-soluble Al content is preferably set at 0.1 to 0.5% by mass in terms of ensuring the toughness of the weld metal and improving the resistance to hygroscopicity of the flux cored wire.

### [Mg and Mg compound(s): optionally 0.05 to 1% by mass]

The flux cored wire may contain 0.05 to 1% by mass of at least one of Mg and Mg compound (s) in total in terms of Mg. The total content of the Mg and Mg compound(s) is set within this range, thereby further improving the toughness of the weld metal. On the other hand, when the total content of the Mg and Mg compound(s) is less than 0.05% by mass, the toughness of the weld metal might be degraded, whereas when the total content thereof is more than 1% by mass, the slag covering property is degraded.

### [Ti and Ti compound(s): 1 to 10% by mass]

The flux cored wire contains 1 to 10% by mass of at least one of Ti and Ti compound (s) in total in terms of Ti. The total content of the Ti and Ti compound(s) is set within this range, thereby further improving the toughness of the weld metal. On the other hand, when the total amount of the Ti and Ti compound (s) is less than 1% by mass, the slag covering property might be degraded, whereas when the total amount thereof is more than 10% by mass, the weld metal tends to have excessive strength.

Therefore, in terms of improving the slag covering property, the total content of the Ti and Ti compound(s) is preferably 2% by mass or more, and more preferably 3% by mass or more. Further, in terms of setting the strength of weld metal in a better range, the total content thereof is preferably 8% by mass or less.

### [Si and Si compound(s): optionally 0.5 to 2% by mass]

The flux cored wire may contain 0.5 to 2% by mass of at least one of Si and Si compound (s) in total in terms of Si. The total content of the Si and Si compound(s) is set within this range, thereby enhancing the viscosity of the weld metal, which can improve the wettability to a base metal and the bead shape. On the other hand, when the total content of the Si and Si compound(s) is less than 0.5% by mass, the spatter generation amount might be increased, whereas when the total content thereof is more than 2% by mass, the toughness of the weld metal might be degraded.

### [Mn: optionally 1.0 to 3.0% by mass]

When the Mn content is less than 1.0% by mass, the toughness of the weld metal might be degraded. When the Mn content is more than 3. 0% by mass, the weld metal tends to have excessive strength. Therefore, the Mn content is preferably set at 1.0 to 3.0% by mass. In this way, the toughness of the weld metal can be further improved.

### [C: optionally 0.02 to 0.15% by mass]

When the C content is less than 0.02% by mass, the toughness of the weld metal might be degraded. When the C content is more than 0.15% by mass, hot cracking tends to occur in the weld metal. Therefore, the C content is preferably set at 0.02 to 0.15% by mass. Thus, the resistance to hot cracking of the weld metal can be improved, and the toughness of the weld metal can be further improved.

### [P: 0.030% by mass or less (including 0% by mass)]

When the P content is more than 0.030% by mass, the toughness of the weld metal might be degraded. Therefore, the P content is set at 0.030% by mass or less. In this way, the toughness of the weld metal can be further improved.

### [S: 0.030% by mass or less (including 0% by mass)]

When the S content is more than 0.030% by mass, the toughness of the weld metal might be degraded. Therefore, the S content is set at 0.030% by mass or less. In this way, the toughness of the weld metal can be further improved.

### [Na compound(s), K compound(s) and Li compound(s): optionally 0.05 to 0.5% by mass]

When the total content of the Na compound(s), K compound(s) and Li compound(s) is less than 0.05% by mass, the spatter generation amount might be increased, whereas when the total content thereof is more than 0.5% by mass, the resistance to hygroscopicity might be reduced. Thus, when adding one, or two or more of the Na compound(s), the K compound(s) and the Li compound(s), the flux cored wire preferably contains 0.05 to 0.5% by mass in total of the added compound(s) . In this way, the spatter generation amount can be reduced, and the resistance to hygroscopicity of the flux cored wire can be further improved. Here, the contents of the Na compound(s), K compound (s) and Li compound(s) are values in terms of Na, K and Li, respectively.

### [F compound(s): optionally 0.05 to 0.3% by mass]

When the total content of the F compound(s) is less than 0.05% by mass, the spatter generation amount might be increased, whereas when the total content thereof is more than 0.3% by mass, the resistance to hygroscopicity might be reduced. Therefore, the total content of the F compound(s) is preferably set at 0.05 to 0.3% by mass. In this way, the spatter generation amount can be reduced, and the resistance to hygroscopicity of the flux cored wire can be further improved.

### [Zr and Zr compound(s): optionally 0.5% by mass or less (excluding 0% by mass)]

The flux cored wire may contain 0.5% by mass or less of at least one of Zr and Zr compound (s) in total in terms of Zr. In this way, the spatter generation amount can be reduced. When the total content of the Zr and Zr compound (s) is more than 0.5% by mass, the spatter generation amount might be increased.

### [Bi and Bi compound(s): optionally 0.005 to 0.050% by mass]

The flux cored wire may contain 0.005 to 0.050% by mass of at least one of Bi and Bi compound(s) in total in terms of Bi. The total content of the Bi and Bi compound (s) is set within this range, thereby enabling improvement of the slag removability.

### [At least one of B and B compound(s): optionally 0.0001 to 0.0100% by mass in total in terms of B, Cu: optionally 0.5% by mass or less (excluding 0% by mass), Ni: optionally 3.0% by mass or less (excluding 0% by mass), Cr: optionally 0.5% by mass or less (excluding 0% by mass), Mo: optionally 0.5% by mass or less (excluding 0% by mass), Nb: optionally 0.2% by mass or less (excluding 0% by mass), V: optionally 0.2% by mass or less (excluding 0% by mass), and rare earth metal(s)(REM(s)): optionally 0.01 to 0.5% by mass]

At least one of B and B compound(s), Cu, Ni, Cr, Mo, Nb, V and REM(s) have the effect of improving the mechanical properties (strength or toughness) of the weld metal. Thus, at least one kind of element selected from the group consisting of at least one of B and B compound(s), Cu, Ni, Cr, Mo, Nb, V and REM(s) can be added as needed.

Note that when the contents of these elements become large, the strength of the weld metal is excessively increased, easily causing cracks. For this reason, when adding these elements, the flux cored wire contains at least one of B and B compound (s) : 0.0001 to 0.0100% by mass in total in terms of B, Cu: 0.5% by mass or less (excluding 0% by mass), Ni: 3.0% by mass or less (excluding 0% by mass), Cr: 0.5% by mass or less (excluding 0% by mass), Mo: 0.5% by mass or less (excluding 0% by mass), Nb: 0.2% by mass or less (excluding 0% by mass), V: 0.2% by mass or less (excluding 0% by mass) and rare earth metal(s)(REM): 0.01 to 0.5% by mass. Thus, the weld metal with the improved mechanical properties can be obtained.

### [Fe: 77% by mass or more]

The flux cored wire contains 77% by mass or more of Fe relative to the total mass of the wire to ensure the weld quantity.

### [Balance]

The balance of the composition of the flux cored wire includes alloying agents, such as Ca and Li, and a compound thereof, and inevitable impurities, such as Sb and As. When the above-mentioned respective elements are added in the form of oxide and/or nitride, the balance of the flux cored wire contains O and/or N.

### [Manufacturing Method]

A manufacturing method for the flux cored wire is not specifically limited. However, the flux cored wire can be manufactured, for example, by the following method. First, a steel strip for configuring the outer sheath is formed by a forming roll while being fed in the longitudinal direction, into a U-shaped open pipe. Then, an oxide, metal or an alloy, Fe powder, and the like are blended in predetermined quantities such that the flux has a predetermined chemical composition. Then, after the prepared flux was filled into the outer sheath, the outer sheath with the flux is processed to have a circular cross-section. Thereafter, the outer sheath with the flux is drawn by a cold drawing process into a wire having a wire diameter, for example, of 1.0 to 2.0 mm. Note that the wire hardened during the cold working may be annealed to be softened.

As mentioned in detail above, the flux cored wire specifies the acid-soluble Al content in each of the flux components classified based on the particle size, and thus can have the adequate welding workability, thereby producing the weld metal with excellent mechanical properties and resistance to hot cracking, further making the hygroscopic properties of the flux better to improve the resistance to hygroscopicity thereof. The contents of the acid-soluble Al and any added components are set in the above-mentioned ranges, further enabling improvement of the above-mentioned effects.

### Examples

The effects of the present invention will be specifically described below by comparison between Examples of the present invention and Comparative Examples. In Examples, a flux was filled into a steel outer sheath having a diameter of 1.0 to 2.0 mm. In this way, flux cored wires in Examples and Comparative Examples were fabricated. Specifically, the steel outer sheath 1 having an outer sheath composition set in a range shown in Table 1 below (% by mass) was formed as shown from part(a) to part(b) of Fig 1, and subsequently the flux 2 containing the acid-soluble Al was filled into the steel outer sheath 1 as shown from part (b) to part (c) of Fig. 1. Then, as shown from part (c) to part (d) of Fig. 1, the steel outer sheath 1 is formed in such a manner as to hold the flux 2 within the steel outer sheath 1, followed by drawing as shown from part (d) to part (e) of Fig. 1. In this way, the flux cored wires 10 in Examples of the present invention and Comparative Examples were fabricated. The particle-size distribution of the Al raw material for the acid-soluble Al included in the flux 2 was adjusted using a method of blending a plurality of kinds of raw materials.

The following Table 1 shows the ranges (% by mass) of the outer sheath components. Note that the range (% by mass) of each outer sheath component indicates the ratio of the mass of each component to the entire mass of the outer sheath components.

The following Tables 2 to 5 show the acid-soluble Al content in the flux component with each particle size, the wire composition and the flux filling ratio in the flux cored wire in each of Examples and Comparative Examples. The acid-soluble Al content (% by mass) indicates the ratio of the acid-soluble Al content to the total mass of the flux component having each of particle sizes (75 µm or less, more than 75 µm and 106 µm or less and more than 106 µm). The wire composition (% by mass) indicates the ratio of the mass of each component of the wire to the total mass of the wire. The flux filling ratio (% by mass) indicates the ratio of the mass of the flux to the total mass of the wire. Note that the balance of the wire components shown in Tables 3 and 5 below corresponds to an oxygen (O) content of an oxide of each element and a nitrogen (N) content of a nitride of each element, and contents of inevitable impurities.

**[Table 1]**

| | Ranges of outer sheath components (% by mass) | | | | | | | | | | |
|---|---|---|---|---|---|---|---|---|---|---|---|
| | C | Si | Mn | P | S | Cu | Ni | Cr | Ti | Al | B |
| Outer sheath | ≤ 0.10 | ≤ 0.10 | 0.10-0.90 | ≤ 0.03 | ≤ 0.03 | ≤ 0.20 | | | ≤ 0.05 | ≤ 0.05 | ≤ 0.005 |

| | | | | | | | | | | | |
|---|---|---|---|---|---|---|---|---|---|---|---|
| *Balance being Fe and inevitably impurities. | | | | | | | | | | | |

**[Table 2]**

| | No. | Acid-soluble Al content (% by mass) | | |
|---|---|---|---|---|
| | | 75 µm or less | more than 75 µm and 106 µm or less | more than 106 µm |
| | 1 | 1.5 | 4.2 | 0.5 |
| | 2 | 3.8 | 0.5 | 5.8 |
| | 3 | 1.5 | 3.6 | 0.3 |
| | 4 | 2.9 | 2.9 | 3.4 |
| | 5 | 1.3 | 0.5 | 0.5 |
| | 6 | 4.0 | 0.1 | 0.5 |
| | 7 | 0.2 | 1.6 | 1.9 |
| | 8 | 3.2 | 2.2 | 2.8 |
| | 9 | 4.6 | 3.5 | 0.7 |
| | 10 | 4.0 | 2.6 | 0.6 |
| | 11 | 2.3 | 2.2 | 1.4 |
| | 12 | 3.9 | 0.4 | 6.6 |
| | 13 | 2.1 | 3.7 | 1.4 |
| Examples | 14 | 0.5 | 1.0 | 2.3 |
| | 15 | 0.8 | 0.4 | 2.9 |
| | 16 | 1.1 | 2.4 | 0.8 |
| | 17 | 4.9 | 4.0 | 5.4 |
| | 18 | 3.1 | 3.5 | 6.6 |
| | 19 | 3.8 | 0.3 | 5.6 |
| | 20 | 2.8 | 4.4 | 3.5 |
| | 21 | 0.6 | 0.8 | 0.9 |
| | 22 | 0.8 | 1.9 | 2.8 |
| | 23 | 4.5 | 2.1 | 2.4 |
| | 24 | 0.9 | 4.0 | 3.3 |
| | 25 | 1.0 | 2.0 | 3.1 |
| | 26 | 2.2 | 1.2 | 6.8 |

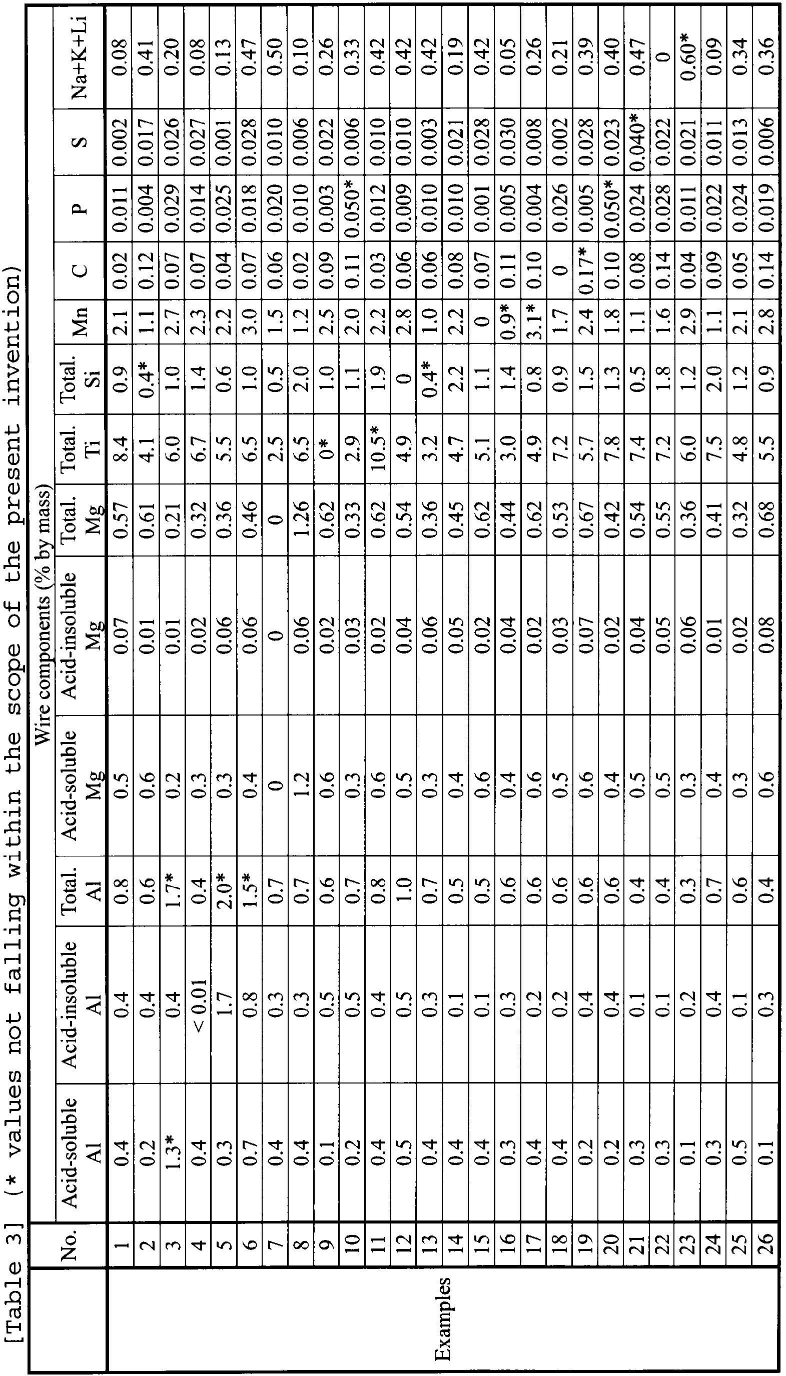

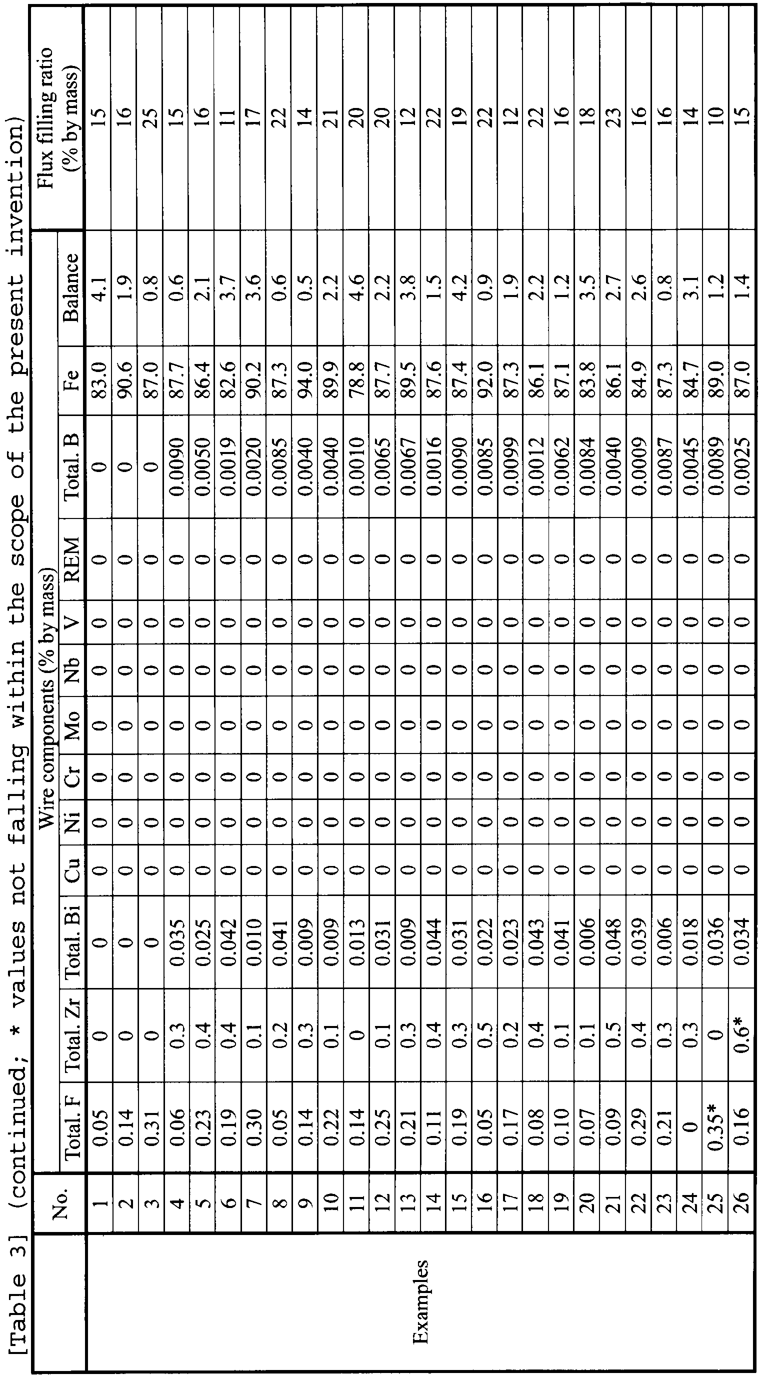

**[Table 4]**

| | No. | Acid-soluble Al content (% by mass) | | |
|---|---|---|---|---|
| | | 75 µm or less | more than 75 µm and 106 µm or less | more than 106 µm |
| Examples | 27 | 4.1 | 1.3 | 3.6 |
| | 28 | 0.3 | 1.9 | 4.1 |
| | 29 | 3.1 | 0.2 | 6.5 |
| | 30 | 0.9 | 1.6 | 4.7 |
| | 31 | 3.7 | 1.8 | 0.8 |
| | 32 | 2.9 | 2.3 | 2.5 |
| | 33 | 0.9 | 2.4 | 0.3 |
| | 34 | 4.3 | 1.0 | 3.5 |
| | 35 | 3.6 | 1.1 | 6.1 |
| | 36 | 1.9 | 2.6 | 5.2 |
| | 37 | 2.9 | 2.5 | 5.3 |
| | 38 | 1.9 | 1.1 | 0.4 |
| | 39 | 3.8 | 0.8 | 5.8 |
| | 40 | 3.8 | 0.8 | 5.5 |
| | 41 | 3.6 | 0.8 | 5.8 |
| Comparative Examples | 42 | < 0.01 | 1.3 | 0.6 |
| | 43 | < 0.01 | < 0.01 | 6.0 |
| | 44 | 0.8 | < 0.01 | 1.5 |
| | 45 | 3.2 | < 0.01 | < 0.01 |
| | 46 | 3.5 | 2.9 | < 0.01 |
| | 47 | < 0.01 | < 0.01 | < 0.01 |
| | 48 | 7.3 | 2.4 | 2.3 |
| | 49 | 6.2 | 5.3 | 6.8 |
| | 50 | 1.0 | 8.1 | 3.7 |
| | 51 | 0.3 | 6.8 | 7.1 |
| | 52 | 3.0 | 3.3 | 8.5 |
| | 53 | 6.0 | 5.1 | 7.4 |

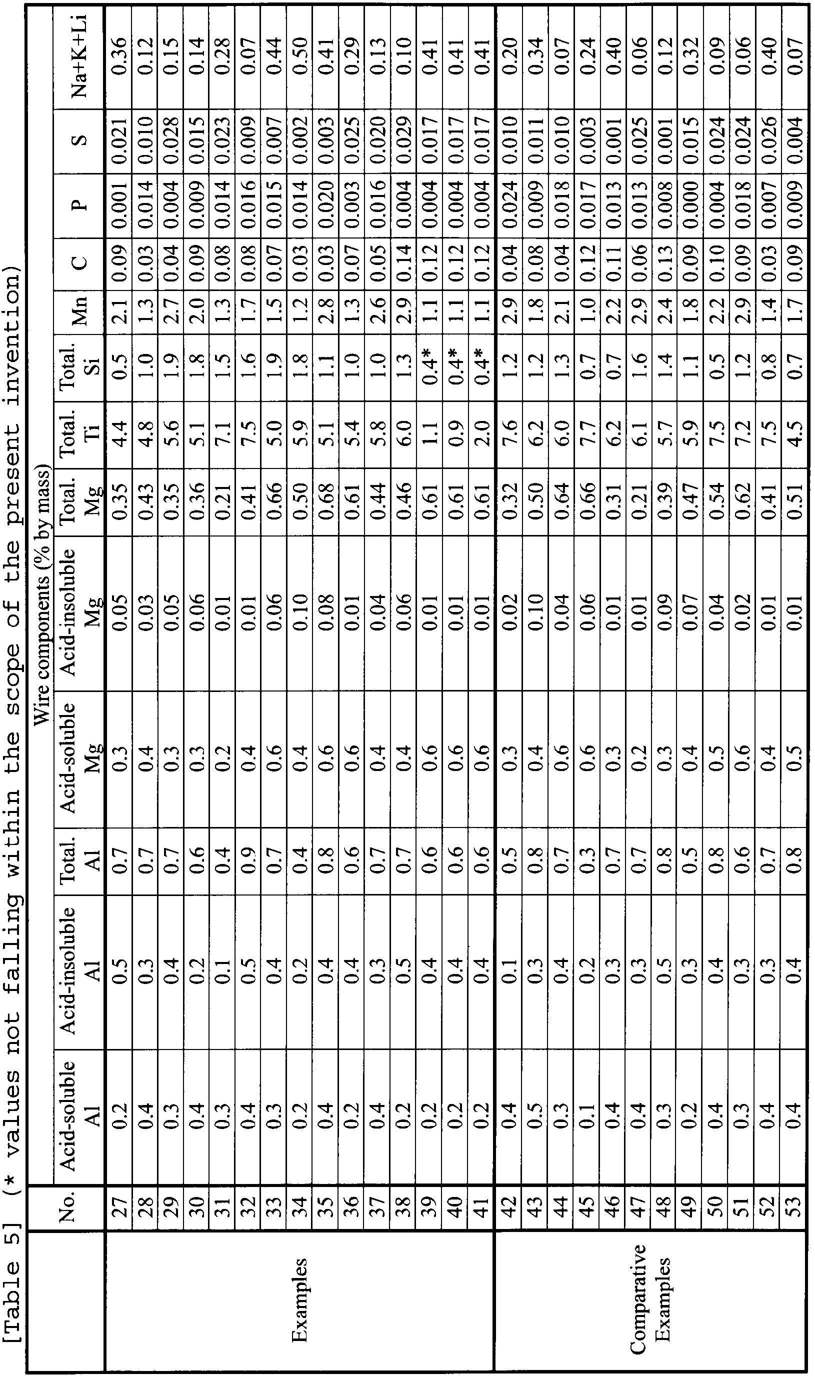

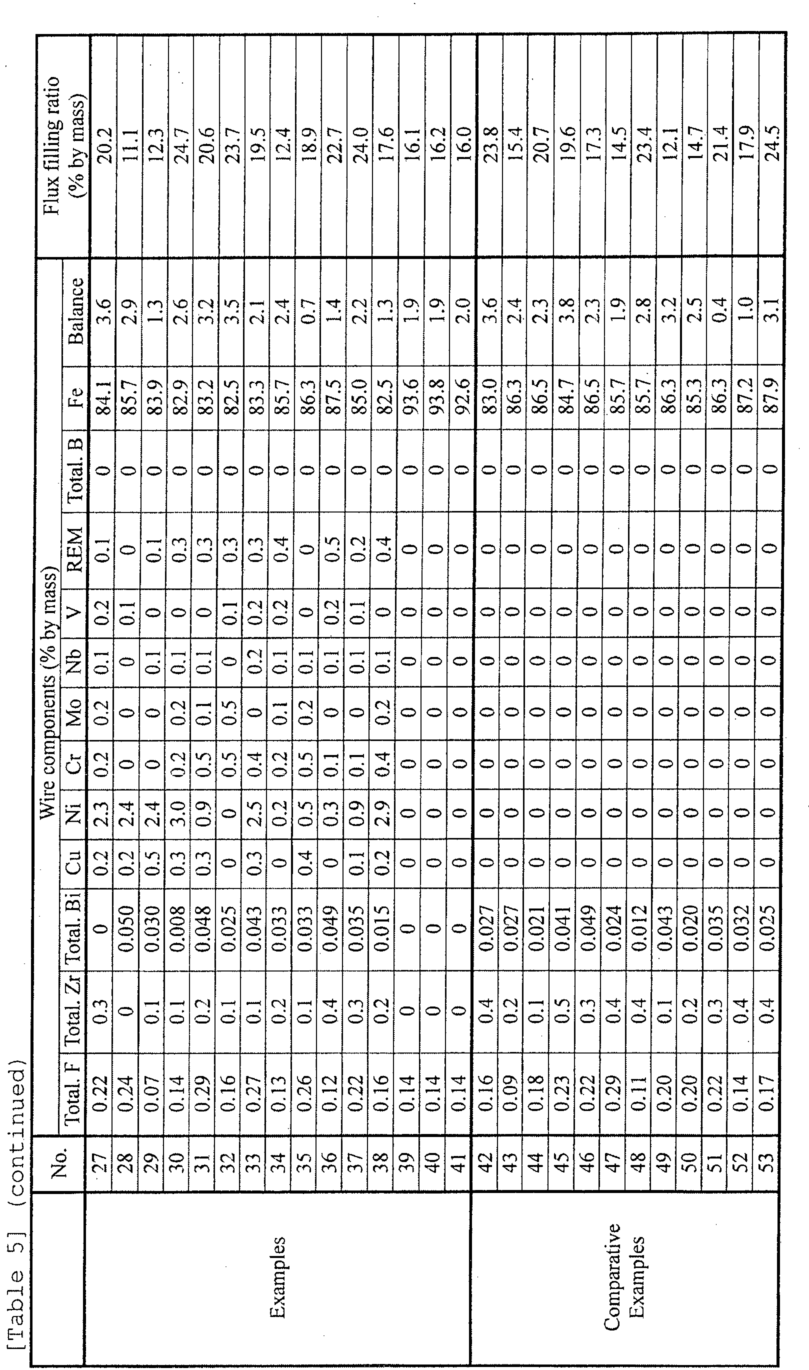

The respective flux cored wires in Examples and Comparative Examples were evaluated in the following ways.

### <Acid-soluble Al content>

A flux was sampled from each of the flux cored wires obtained after drawing in Examples and Comparative Examples. The flux was separated by employing an analyzer RSP-105 manufactured by Seishin Enterprise Co., Ltd., and using a sieve in conformance with JIS Z 8801-1:2006, into (1) a flux component having a particle diameter of 75 µm or less, (2) a flux component having a particle diameter of more than 75 µm and 106 µm or less and (3) a flux component having a particle diameter of more than 106 µm. At this time, conditions for sieving were as follows: an acoustic wave frequency of 80 Hz; a pulse interval of 1 sec; and a classification time of 2 minutes. The thus-obtained flux component with each particle size was dissolved in a solution (aqua regia) that included a mixture of concentrated hydrochloric acid and concentrated nitric acid in a ratio of 3:1 by volume, and Al dissolved in this solution was defined as the acid-soluble Al.

### <Slag covering property>

The slag covering property was evaluated by a visual inspection method. Samples in which a slag covered the entire weld bead and could be naturally separated across its entire length or its part from the bead were rated as being very good (A) ; samples in which a slag covered the entire weld bead, though not naturally separated from the bead, were rated as being good (B) ; and samples in which a slag did not cover the entire weld bead were rated as being bad (C).

### <Spatter generation amount>

The spatter generation amount was determined by measuring an amount of generated spatter per unit time by a whole collection method defined by WES 2087:2000. Welding conditions were set to the same as the weld-quantity measurement conditions. Samples having a spatter generation amount of 1.0 g/min or less were rated as being excellent (A) ; samples having a spatter generation amount of more than 1.0 g/min and 1.5 g/min or less were rated as being good (B) ; and samples having a spatter generation amount of more than 1.5 g/min were rated as being bad (C).

### <Mechanical properties of weld metal>

Mechanical properties of a weld metal in each sample were evaluated by a tension test and an impact test in conformance with "Methods of tension and impact tests for deposited metal" defined by JIS Z 3111:2005. At this time, welding conditions were set to a welding current of 290 A to 320 A (DC-EP), and an interpass temperature of 150°C ± 10°C. In the evaluation of the low-temperature toughness, samples having an impact value of 100 J or more at atmospheric temperature of -40°C were rated as being excellent (A+); samples having an impact value of 70 J or more and less than 100 J were rated as very good (A) ; samples having an impact value of 47 J or more and less than 70 J were rated as good (B) ; and samples having an impact value of less than 47 J were rated bad (C). Samples having a 0.2% yield strength of 390 MPa or more were rated as Pass. Samples having a tensile strength of 490 Mpa or more and 670 MPa or less were rated as Pass.

### <Resistance to hygroscopicity>

The resistance to hygroscopicity of each sample was evaluated by cutting the flux cored wire every 3 cm to produce three specimens, exposing these specimens under an atmosphere at a temperature of 30°C and a relative humidity of 80% for 24 hours, and then measuring the amount of moisture absorbed in the flux of the flux cored wire by the Karl Fischer's method. In this measurement, to gasify the moisture of the flux in the flux cored wire, the specimen was heated at 750°C, and Ar gas was guided as a carrier gas to a measurement device. As a result, samples having a moisture content in the flux of the flux cored wire of 500 ppm or less were rated as being very good (A) ; samples having a moisture content of more than 500 ppm and 750 ppm or less were rated as being good (B) ; and samples having a moisture content of more than 750 ppm were rated as being bad (C), relative to the total mass of the wire.

### <Resistance to hot cracking>

The resistance to hot cracking was evaluated based on "Method of FISCO test" defined by JIS Z 3155: 1993. At this time, welding conditions were set to a welding current of 270 A, an arc voltage of 30 V, and a velocity of 350 mm/min. In the evaluation, samples having the cracking rate of less than 30% except for crater cracks were rated as Pass.

The above-mentioned results are collectively shown in Tables 6 and 7 below.

**[Table 6]**

| | No. | Slag covering | Spatter generation amount | Resistance to hygroscopicity | Low-temperature toughness (vE-40) |
|---|---|---|---|---|---|
| | 1 | A | A | A | A+ |
| | 2 | A | A | A | A |
| | 3 | A | A | A | B |
| | 4 | A | A | A | A+ |
| | 5 | A | A | A | A |
| | 6 | A | A | A | A |
| | 7 | A | A | A | A |
| | 8 | B | A | A | A+ |
| | 9 | B | A | A | A+ |
| | 10 | A | A | A | A+ |
| | 11 | A | A | A | A+ |
| | 12 | A | B | A | A |
| | 13 | A | B | A | A+ |
| Examples | 14 | A | A | A | A |
| | 15 | A | A | A | B |
| | 16 | A | A | A | A |
| | 17 | A | A | A | A |
| | 18 | A | A | A | B |
| | 19 | A | A | A | A |
| | 20 | A | A | A | A |
| | 21 | A | A | A | A |
| | 22 | A | B | A | A+ |
| | 23 | A | A | B | A+ |
| | 24 | A | B | A | A+ |
| | 25 | A | A | B | A+ |
| | 26 | A | B | A | A |

**[Table 7]**

| | No. | Slag covering | Spatter generation amount | Resistance to hygroscopicity | Low-temperature toughness (vE-40) |
|---|---|---|---|---|---|
| Examples | 27 | A | A | A | A+ |
| | 28 | A | A | A | A+ |
| | 29 | A | A | A | A |
| | 30 | A | A | A | A |
| | 31 | A | A | A | A+ |
| | 32 | A | A | A | A+ |
| | 33 | A | A | A | A |
| | 34 | A | A | A | A+ |
| | 35 | A | A | A | A |
| | 36 | A | A | A | A |
| | 37 | A | A | A | A |
| | 38 | A | A | A | A |
| | 39 | A | A | A | A+ |
| | 40 | B | A | A | A+ |
| | 41 | A | A | A | A+ |
| Comparative Examples | 42 | A | C | A | A+ |
| | 43 | A | C | A | A |
| | 44 | A | C | A | A+ |
| | 45 | A | C | A | C |
| | 46 | A | A | A | c |
| | 47 | A | C | A | C |
| | 48 | A | A | C | A+ |
| | 49 | C | A | C | A |
| | 50 | C | A | A | A+ |
| | 51 | C | A | A | C |
| | 52 | A | A | A | c |
| | 53 | C | A | C | C |

As shown in Table 7 mentioned above, in the flux cored wires of samples Nos. 42 to 45 and 47, the acid-soluble Al content (s) in each or both of the flux component with a particle diameter of 75 µm or less and the flux component with a particle diameter of more than 75 µm and 106 µm or less did not satisfy the range(s) defined by the present invention. Thus, these wires of samples Nos. 42 to 45 and 47 increased the spatter generation amount. Further, in the flux cored wires of samples Nos. 45 and 47, the acid-soluble Al content in the flux component with a particle diameter of more than 106 µm did not satisfy the range defined by the present invention, thus degrading the toughness of the weld metal. On the other hand, in the flux cored wire of sample No. 46, the acid-soluble Al content in the flux component with the particle diameter of more than 106 µm did not satisfy the range defined by the present invention, resulting in excellent welding workability and resistance to hygroscopicity but degrading the toughness of the weld metal.

In the flux cored wires of samples Nos. 48, 49 and 53, the acid-soluble Al content in the flux component with a particle diameter of 75 µm or less exceeded the range defined by the present invention, thus degrading the resistance to hygroscopicity of the flux. In the flux cored wires of samples Nos. 49 to 51 and 53, the acid-soluble Al content in the flux component with a particle diameter of more than 75 µm and 106 µm or less exceeded the range defined by the present invention, thus degrading the slag covering property. Further, in the flux cored wires of samples Nos. 51 to 53, the acid-soluble Al content in the flux component with a particle diameter of more than 106 µm exceeded the range defined by the present invention, thus degrading the toughness of the weld metal.

On the other hand, as shown in Tables 6 and 7, the flux cored wires of samples Nos. 1 to 41 as Examples had excellent welding workability (slag covering property, spatter generation amount), and toughness of the weld metal, and further excellent resistance to hygroscopicity of the wire, compared to the flux cored wires of samples Nos. 42 to 53 as Comparative Examples. Although not shown in Tables 6 and 7, all the flux cored wires of samples Nos. 1 to 41 as Examples were also rated "Pass" regarding the evaluation results of the 0.2% yield strength, tensile strength and resistance to hot cracking of the weld metal. As can be seen from these results, it is confirmed that the present invention can achieve the flux cored wire for gas shielded arc welding that has excellent resistance to hygroscopicity and adequate welding workability and can produce weld metal with excellent mechanical properties.

### Description of Reference Numerals

- 1: Steel outer sheath
- 2: Flux
- 3: Flux cored wire

## Claims

1. A flux cored wire for gas shielded arc welding, the flux being filled into a steel outer sheath, wherein
a flux filling ratio is in a range of 10 to 25% by mass relative to the total mass of the wire,
the flux contains acid-soluble Al,
the acid-soluble Al is contained in a content of 0.01 to 1.0% by mass relative to the total mass of the wire,
a content of the acid-soluble Al in a first flux component having a particle diameter of 75 µm or less in the flux is set at 0.1 to 5% by mass relative to the total mass of the first flux component,
a content of the acid-soluble Al in a second flux component having a particle diameter of more than 75 µm and 106 µm or less in the flux is set at 0.1 to 5% by mass relative to the total mass of the second flux component, and
a content of the acid-soluble Al in a third flux component having a particle diameter of more than 106 µm in the flux is set at 0.1 to 7% by mass relative to the total mass of the third flux component,
wherein the flux cored wire has a composition consisting of, relative to the total mass of the wire:
1 to 10% by mass of at least one of Ti and Ti compound(s) in total in terms of Ti;
0.030% by mass or less of P;
0.030% by mass or less of S;
0.01 to 1.0% by mass of at least one of Al and Al compound(s) in total in terms of Al;
optionally 0.5 to 2% by mass of at least one of Si and Si compound(s) in total in terms of Si;
optionally 1.0 to 3.0% by mass of Mn;
optionally 0.02 to 0.15% by mass of C;
optionally 0.05 to 1% by mass of at least one of Mg and Mg compound(s) in total in terms of Mg;
optionally 0.05 to 0.5% by mass of at least one of Na compound(s), K compound(s) and Li compound(s) in total in terms of Na, K, and Li, respectively; optionally 0.05 to 0.3% by mass of F compound(s) in terms of F;
optionally 0.5% by mass or less of at least one of Zr and Zr compound(s) in total in terms of Zr;
optionally 0.005 to 0.050% by mass of at least one of Bi and Bi compound(s) in total in terms of Bi; and
optionally, at least one selected from the group consisting of:
Cu: 0.5% by mass or less;
Ni: 3.0% by mass or less;
Cr: 0.5% by mass or less;
Mo: 0.5% by mass or less;
Nb: 0.2% by mass or less;
V: 0.2% by mass or less;
at least one of B and B compound(s): 0.0001 to 0.0100% by mass in total in terms of B; and
rare earth metal(s)(REM(s)): 0.01 to 0.5% by mass,
wherein a Fe content is 77% by mass or more, relative to the total mass of the wire,
with the balance of the composition being alloying agents, optionally including one or more of Ca and Li, and compound(s) thereof, and inevitable impurities.

## Patentansprüche

1. Fülldraht zum gasgeschützten Lichtbogenschweißen, wobei das Flussmittel in eine Stahlaußenhülle gefüllt ist, wobei
ein Flussmittelfüllanteil in einem Bereich von 10 bis 25 Massen-%, bezogen auf die Gesamtmasse des Drahts, liegt,
das Flussmittel säurelösliches Al enthält,
das säurelösliche Al in einem Gehalt von 0,01 bis 1,0 Massen-%, bezogen auf die Gesamtmasse des Drahts, enthalten ist,
ein Gehalt des säurelöslichen Al in einer ersten Flussmittelkomponente mit einem Teilchendurchmesser von 75 µm oder weniger in dem Flussmittel auf 0,1 bis 5 Massen-%, bezogen auf die Gesamtmasse der ersten Flussmittelkomponente, eingestellt ist,
ein Gehalt des säurelöslichen Al in einer zweiten Flussmittelkomponente mit einem Teilchendurchmesser von mehr als 75 µm und 106 µm oder weniger in dem Flussmittel auf 0,1 bis 5 Massen-%, bezogen auf die Gesamtmasse der zweiten Flussmittelkomponente, eingestellt ist und
ein Gehalt des säurelöslichen Al in einer dritten Flussmittelkomponente mit einem Teilchendurchmesser von mehr als 106 µm in dem Flussmittel auf 0,1 bis 7 Massen-%, bezogen auf die Gesamtmasse der dritten Flussmittelkomponente, eingestellt ist,
wobei der Fülldraht eine Zusammensetzung aufweist, welche aus, bezogen auf die Gesamtmasse des Drahts, besteht:
insgesamt 1 bis 10 Massen-% von mindestens einem aus Ti und Ti-Verbindung(en) in Bezug auf Ti;
0,030 Massen-% oder weniger von P;
0,030 Massen-% oder weniger von S;
insgesamt 0,01 bis 1,0 Massen-% von mindestens einem aus Al und Al-Verbindung(en) in Bezug auf Al;
gegebenenfalls insgesamt 0,5 bis 2 Massen-% von mindestens einem aus Si und Si-Verbindung(en) in Bezug auf Si;
gegebenenfalls 1,0 bis 3,0 Massen-% von Mn;
gegebenenfalls 0,02 bis 0,15 Massen-% von C;
gegebenenfalls insgesamt 0,05 bis 1 Massen-% von mindestens einem aus Mg und Mg-Verbindung(en) in Bezug auf Mg;
gegebenenfalls insgesamt 0,05 bis 0,5 Massen-% von mindestens einem aus Na-Verbindung(en), K-Verbindung(en) und Li-Verbindung(en) in Bezug auf Na, K bzw. Li;
gegebenenfalls 0,05 bis 0,3 Massen-% von F-Verbindung(en) in Bezug auf F;
gegebenenfalls insgesamt 0,5 Massen-% oder weniger von mindestens einem aus Zr und Zr-Verbindung(en) in Bezug auf Zr;
gegebenenfalls insgesamt 0,005 bis 0,050 Massen-% von mindestens einem aus Bi und Bi-Verbindung(en) in Bezug auf Bi; und
gegebenenfalls mindestens einem, ausgewählt aus der Gruppe, bestehend aus:
Cu: 0,5 Massen-% oder weniger;
Ni: 3,0 Massen-% oder weniger;
Cr: 0,5 Massen-% oder weniger;
Mo: 0,5 Massen-% oder weniger;
Nb: 0,2 Massen-% oder weniger;
V: 0,2 Massen-% oder weniger;
mindestens einem aus B und B-Verbindung(en): insgesamt 0,0001 bis 0,0100 Massen-% in Bezug auf B; und
Seltenerdmetall(en) (REM(s)): 0,01 bis 0,5 Massen-%,
wobei ein Fe-Gehalt 77 Massen-% oder mehr, bezogen auf die Gesamtmasse des Drahts, beträgt,
wobei der Rest der Zusammensetzung Legierungsmittel, gegebenenfalls eines oder mehrere von Ca und Li sowie Verbindung(en) davon einschließend, und unvermeidliche Verunreinigungen ist.

## Revendications

1. Fil fourré pour soudage à l'arc sous protection gazeuse, le flux étant versé dans une gaine externe en acier, dans lequel
un rapport de remplissage de flux est dans une plage de 10 à 25 % en masse par rapport à la masse totale du fil,
le flux contient du Al soluble dans l'acide,
le Al soluble dans l'acide est contenu à une teneur de 0,01 à 1,0 % en masse par rapport à la masse totale du fil,
une teneur en le Al soluble dans l'acide dans un premier composant de flux ayant un diamètre particulaire de 75 µm ou moins dans le flux est réglée à 0,1 à 5 % en masse par rapport à la masse totale du premier composant de flux,
une teneur en le Al soluble dans l'acide dans un deuxième composant de flux ayant un diamètre particulaire de plus de 75 µm et 106 µm ou moins dans le flux est réglée à 0,1 à 5 % en masse par rapport à la masse totale du deuxième composant de flux, et
une teneur en le Al soluble dans l'acide dans un troisième composant de flux ayant un diamètre particulaire de plus de 106 µm dans le flux est réglée à 0,1 à 7 % en masse par rapport à la masse totale du troisième composant de flux,
dans lequel le fil fourré a une composition constituée de, par rapport à la masse totale du fil :
1 à 10% en masse d'au moins un de Ti et composé(s) de Ti au total en termes de Ti ;
0,030 % en masse ou moins de P ;
0,030 % en masse ou moins de S ;
0,01 à 1,0 % en masse d'au moins un de Al et composé(s) de Al au total en termes de Al ;
en option 0,5 à 2 % en masse d'au moins un de Si et composé(s) de Si au total en termes de Si ;
en option 1,0 à 3,0 % en masse de Mn ;
en option 0,02 à 0,15 % en masse de C ;
en option 0,05 à 1 % en masse d'au moins un de Mg et composé(s) de Mg au total en termes de Mg ;
en option 0,05 à 0,5 % en masse d'au moins un de composé(s) de Na, composé(s) de K et composé(s) de Li au total en termes de Na, K et Li, respectivement ;
en option 0,05 à 0,3 % en masse de composé(s) de F en termes de F ;
en option 0,5 % en masse ou moins d'au moins un de Zr et composé(s) de Zr au total en termes de Zr ;
en option 0,005 à 0,050 % en masse d'au moins un de Bi et composé(s) de Bi au total en termes de Bi ; et
en option, au moins un sélectionné parmi le groupe constitué de :
Cu : 0,5 % en masse ou moins ;
Ni : 3,0 % en masse ou moins ;
Cr : 0,5 % en masse ou moins ;
Mo : 0,5 % en masse ou moins ;
Nb : 0,2 % en masse ou moins ;
V : 0,2 % en masse ou moins ;
au moins un de B et composé(s) de B : 0,0001 à 0,0100 % en masse au total en termes de B ; et
métal(métaux) de terres rares (REM) : 0,01 à 0,5 % en masse,
dans lequel une teneur en Fe est de 77 % en masse ou plus, par rapport à la masse totale du fil,
avec l'équilibre de la composition qui est des agents d'alliage, incluant en option un ou plusieurs de Ca et Li, et des composé(s) de ceux-ci, et des impuretés inévitables.
